# EUROPEAN PATENT SPECIFICATION

(11) **EP 1 242 239 B1**
(45) Date of publication and mention of the grant of the patent: **06.04.2011**
(21) Application number: 00947260.6
(22) Date of filing: 12.07.2000
(51) Int. Cl.: B32B 3/26, C08K 5/00, C09K 5/06

(54) **THERMAL CONTROL COMPOSITE**
THERMOSTEUERUNGSZUSAMMENSETZUNGEN
COMPOSITE DE REGULATION THERMIQUE

(30) Priority: 14.07.1999 US 143722 P
(43) Date of publication of application: 25.09.2002
(73) Proprietor: Hayes, Claude Q.C., San Diego, CA 92103 (US)
(72) Inventor: Hayes, Claude Q.C., San Diego, CA 92103 (US)
(74) Representative: Evens, Paul Jonathan
(86) International application number: PCT/US2000/018984
(87) International publication number: WO 2001/005581

(56) References cited:
- EP-A- 0 344 014
- WO-A-94/02257
- WO-A-99/11455
- US-A- 4 581 285
- US-A- 4 632 865
- US-A- 5 709 914

## Description

### Field of the Invention

The present invention relates to a thermal control composite comprising a polymer and an endothermic agent. The endothermic agent is distributed, dispersed and suspended within and throughout the polymer and cured to form a composite for use in insulating, thermoprotecting, heat absorbing applications on the one hand and heat maintenance applications of all types on the other.

### Background of the Invention

All of the prior art known to Applicant teaches the use of endothermic agents in heat sinks wherein the endothermic agents are either coated, adsorbed or packed into various supporting structures.

For example, Applicant's first patent U.S. Patent No. 4, 446, 916 discloses an endothermic agent adsorbed onto the fibers of the fabric matrix.

Applicant's second patent, U.S. Patent No. 5,709,914 discloses an thermal storage compound packed into an open cell network, comprising natural, synthetic or metal fibers, spheres, particles, foams, or materials capable of being formed into a container suitable for enclosing and maintaining an item's high heat.

There are two very serious drawbacks to the prior art. First, leakage of the endothermic or thermal storage compound to the surrounding environment can occur, if the physical integrity of the various underlying supporting structures is somehow compromised. Such leakage will diminish the effectiveness of the heat sink material and may even lead to the harm and destruction of the item or material the heat sink material is supposed to protect, particularly if the endothermic or thermal storage compounds are harsh and corrosive.

Second, the underlying structures upon which the endothermic or thermal storage compounds are coated, absorbed, adsorbed or packed tend to be stiff and inflexible. The further coating, absorption, adsorption and packing of endothermic or thermal storage compounds on and within such structures will cause them to stiffen even more. This stiffening of the material renders them entirely unsuitable in applications where the heat sink materials must be flexible and in certain situations light, thin and drapeable.

It is therefore an object of the present invention to provide a composition of matter that can act as a heat sink/heat shield, but which will resist leaking the endothermic compound into the environment, by eliminating any possibility of a compromise of the structural integrity of the underlying carrier or support structure in the heat sink material.

It is another object of the present invention to provide a composition of matter for applications requiring a heat sink/heat shield which needs to be thin, flexible, drapeable, and/or conformable, while simultaneously protecting and insulating against high or low heat environments.

It is yet another object of the present invention to provide a composition of matter for applications requiring a heat providing material which will be thin, flexible, drapeable, and/or conformable, while simultaneously protecting and insulating against extreme cold environments.

WO 94/02257 discloses a flexible thermal control composite according to the pre-characterising portion of claim 1.

### SUMMARY OF THE INVENTION

In accordance with the present invention, there is provided a flexible thermal control composite as defined in appendant claim 1 Said composite comprises a polymer and an endothermic agent. The endothermic agent is dispersed, distributed, and suspended in the polymer. Thereafter it is cured to form a "P"olymer "C"ontaining an "E"ndothermic "A"gent (PCEA) composite. This composite now has thermal control properties that make it suitable for a multitude of thermal control applications.

Natural or synthetic polymer may be softened or liquified by being (1) heated, (2) dissolved or (3) suspended in a plasticizer or solvent. When the polymer treated in any of these manners has an endothermic agent added to it, in very specific concentrations, distributed, dispersed, suspended therein and cured, a thermal control composite i.e. a PCEA is formed. Such PCEA is in essence capable of thermal control through its ability to absorb and store heat or through its ability to first absorb heat and then release it. It does so through the use of its endothermic compounds' own inherent thermodynamic, physical and chemical properties, i.e. their latent heats of fusion, hydration, formation, decomposition, vaporization, sublimation, or its allotropic and phase change reactions; while simultaneously completely eliminating any possibility of leakage of its endothermic compounds into the environment, as said agents become an integral part of the PCEA overall physical structure,

Thus, according to the present invention there is provided a PCEA thermal control composite comprising a natural or synthetic polymer and an endothermic agent. The PCEA thermal control composite can be thin, as for example a thin or a thick film, or molded as a thick PCEA brick. When the PCEA is a thin film, then the effective distribution of the endothermic agents within said polymer is 0.0001 to 1.2 gram of endothermic or thermal storage compound per square inch of PCEA, the PCEA having a thickness of 1.3x10⁻⁶ m to 5x10⁻⁵ m (0.05 to 2.0 mil.). On the other hand, where the PCEA is a thick film or molded structure, then the effective concentration of endotherm will be 0.05%-60% by weight endotherm in PCEA.

Full details of the present invention are set forth in the following description and illustrated in the accompanying drawings.

### BRIEF DESCRIPTION OF THE DRAWING

FIG.1 is a perspective view of a thin film PCEA formulated in accordance with the present disclosure;
FIG. 2 is a cross-sectional view taken along a line 2-2' of the thin film PCEA in FIG. 1;
FIG. 3 is a perspective view of a thick film PCEA formulated in accordance with the present disclosure;
FIG. 4 is a cross-sectional view taken along a line 4-4' of the thick film PCEA in FIG. 3;

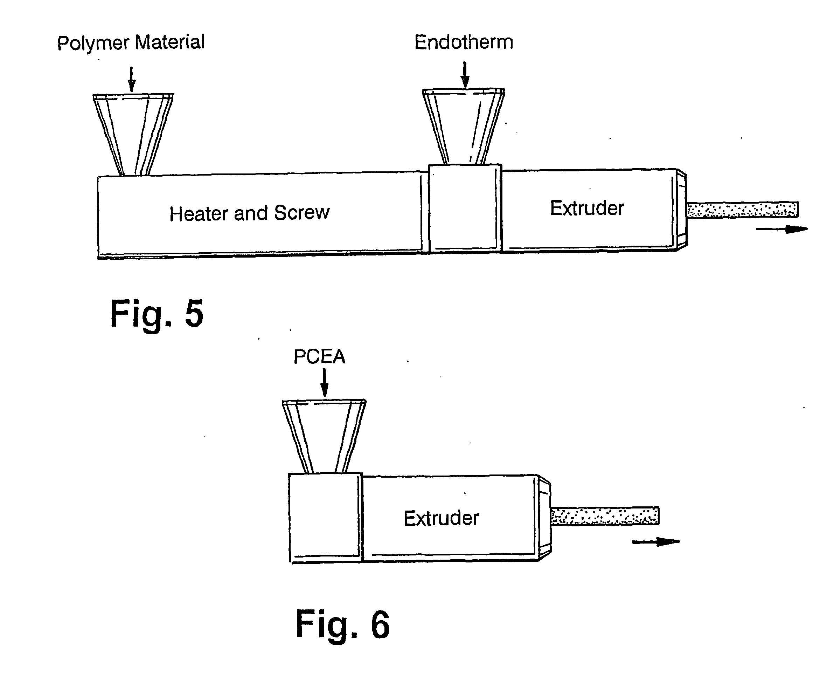

FIG. 5 is a schematic of an extruding apparatus used in the extrusion of PCEA fibers;
FIG. 6. is a schematic of a second type of extruding apparatus used in the extrusion of PCEA fibers;
FIG. 7 is a perspective view of a PCEA fiber formulated and extruded in accordance with the present disclosure;
FIG. 8 and FIG. 9 are top plan views of PCEA materials assembled, woven or knit using PCEA fibers;
FIG. 10 is a schematic of a delivery and adhesion method of a small particulate PCEA onto a plastic substrate.
FIG. 11 is a schematic of a delivery and adhesion method of a large particulate PCEA onto a plastic substrate.
FIG. 12 is a schematic of the delivery of a PCEA into the inner walls of a home.

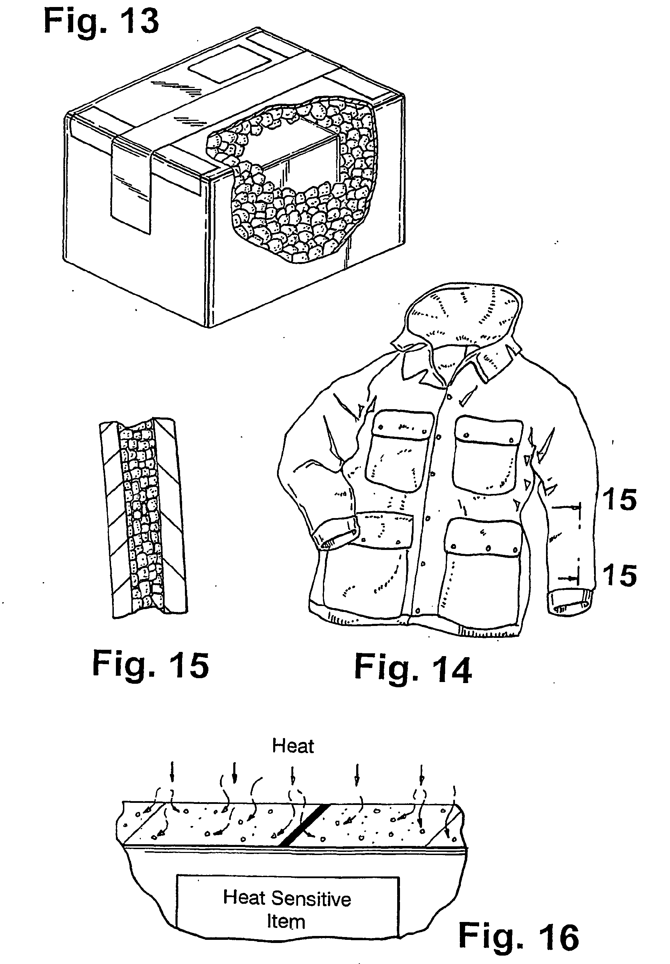

FIG. 13 is a perspective view of a container incorporating one of the embodiments of the PCEA;
FIG. 14 is a somewhat schematic, perspective view of a winter or hunting jacket, incorporating a preferred embodiment of the present inventive PCEA;
FIG. 15 is a cross-sectional view taken along 15-15' of the jacket in Fig. 14, showing another use of the PCEA, in the form of a mulch;
FIG. 16 is a somewhat schematic side view of the endothermic agent in the PCEA absorbing heat, thereby preventing the heat from reaching the heat sensitive device;

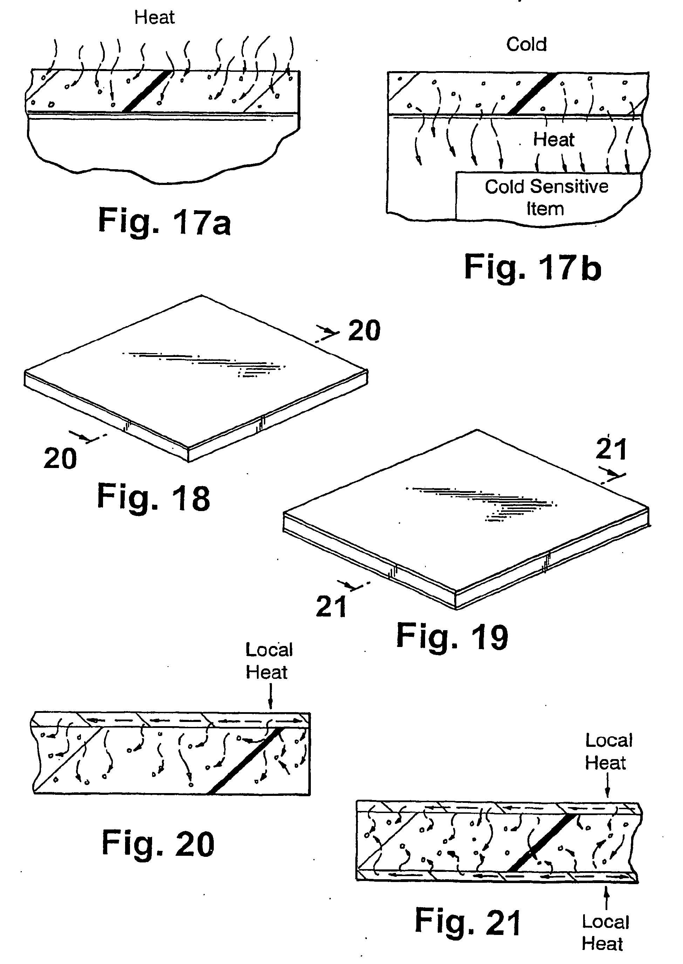

FIG. 17A and FIG 17B are a somewhat schematic view of the inventive PCEA showing the recyclable endothermic agent first absorbing the heat (Fig. 17A) and then releasing the heat to the cold sensitive device, thereby maintaining the temperature of the cold sensitive device constant (Fig. 17B);
FIG.18 is a perspective view of a thin film PCEA formulated in accordance with the present disclosure and contacted to a thermally conductive material, only on one side;
FIG. 19 is a perspective view of a thin film PCEA formulated in accordance with the present disclosure and sandwiched between two layers of thermally conductive material;
FIG. 20 is a cross-sectional view taken along a line 3-3' of the thin film PCEA/thermally conductive material in FIG. 18, wherein the heat of the hot spot applied to one end of the PCEA is diffused across the entire surface of the PCEA and thereafter is absorbed by the PCEA's endothermic agent;
FIG. 21 is a cross-sectional view taken along a line 4-4' of the thick film thermally conductive material/PCEA sandwich of FIG. 19, wherein the heat of the hot spots applied to one end of the sandwich is diffused across the entire surface of the PCEA and thereafter is absorbed by the PCEA's endothermic agent.

### DETAILED DESCRIPTION OF THE PREFERRED EMBODIMENT

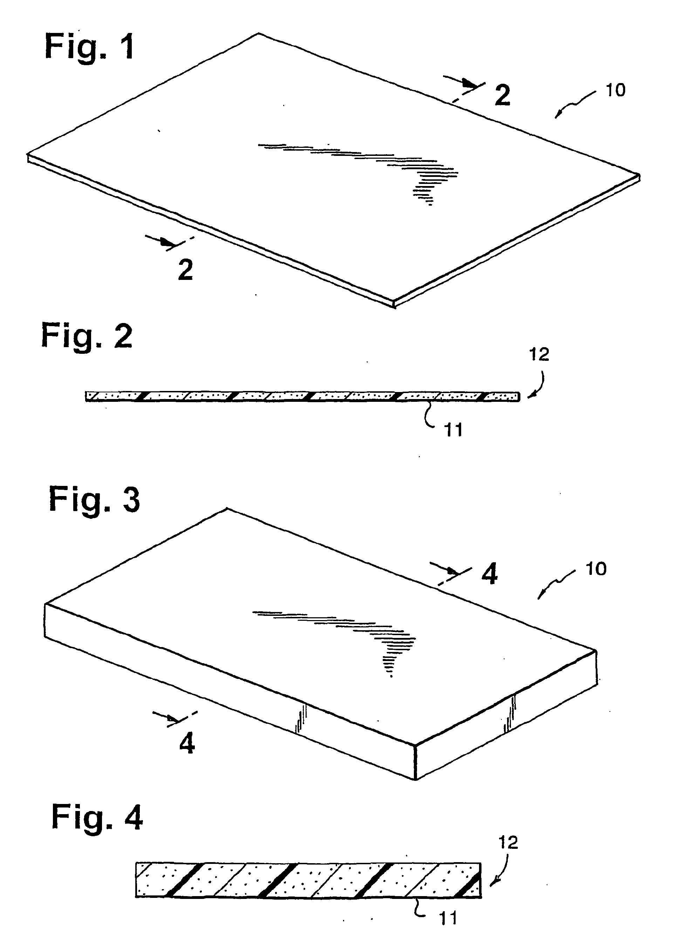

The inventive thermal control composite i.e. the PCEA material 10 of Fig. 1, Fig. 2, Fig. 3, and Fig. 4 shows the endothermic agent 11 dispersed, distributed and suspended within a polymer or plastic 12.

### (a) The polymer or plastic.

The plastic or polymer 12 of the PCEA material 10 may comprise any natural or synthetic polymer or a mixture thereof. Such natural and synthetic polymers comprised all latexes including those used in paint; fluoropolymers such as various TEFLON^{®} species, specifically polytetrafluoroethylene (PTFE), polyfluoroacetate (PFA) and fluoroethylpropylene(FEP) and other fluorinated plastic films having similar thermal stability, i.e. FEP: -200 DEGREES C TO 200 DEGREES C and PFA: -200 DEGREES C TO 250 DEGREES C, that are well known in the art; expanded TEFLON^{®}; high temperature fluoroelastomers such as VITON^{®} and other highly thermoresistant polymers and plastics well known in the art; elastomers such as SILICONE^{®} species specifically polydimethylsiloxane and polymethylphenylsiloxane and other siloxanes well known in the art; polyimides such as KAPTON^{®}; POLYESTERS^{®} such as MYLAR^{®}; high density polymers such as TIVAR^{®} and SPECTRA^{®}; and other polyamides, polyarylates, polyetherimides, polyketones, polyphenylene oxides or sulfides, polyphenylsulfones, polysulfones, acetals, nylons, ABS, polyetherketones, phenolics, polystyrenes, cellulose, polycarbonates, polyethylenes, polypropylenes, acrylics, polyurethanes, polyvinyls, polyvinylchlorides, BRICKLITE^{®}, polymeric and plastic materials well known to those skilled in the art of plastic materials. Preferably though the carrier plastic or polymer 13 should be TEFLON^{®}, SILICONE^{®}, or VITON^{®}.

These polymers can be photo, thermally or chemically cured. More importantly however, they have a molecular structure consisting of long chains of mostly linear molecules, which after being relaxed by either controlled heating, dissolution or suspension in a plasticizer or solvent, provide the interstitial spaces, through which the endothermic or thermal storage compounds weave and are distributed prior to curing and the final formation of the PCEA.

### (b) The endothermic agent.

An endothermic compound or agent is by definition a compound that absorbs heat. The endothermic agents of the present invention are strict endotherms, i.e. they absorb and retain heat without releasing it into the surrounding environment.

The endothermic agents of the present invention comprise the following: aluminum hydroxide, calcium hydroxide, potassium hydroxide, lithium hydroxide and the mixtures thereof; boric acid; paraldehyde, paraformaldehyde, trioxane and the mixtures thereof; lithium formate, lithium acetate, lithium carbonate, calcium carbonate, silicon carbonate, magnesium carbonate, sodium bicarbonate and the mixtures thereof.

These endothermic agents may be micronized and added to the polymer(s) after said polymer(s) have been relaxed by either controlled heating, dissolution or suspension in a plasticizer or solvent. The endothermic agents are then subjected to a mixing process by which they are distributed through and suspended in the polymer(s)' interstitial spaces, or in the interstitial spaces of the outer surface of the polymer(s), and fixed therein through final curing steps which result in the inventive thermal control composite i.e. the PCEA.

The ultimate effective concentration of the endotherm in the PCEA is determined on a case by case application basis by such factors as: the particular application i.e. whether the application requires the absorption of heat or the release of heat, the needed heat capacity of the application, the type of polymer used, the particulate size of the endotherm, and the needed flexibility and use of the novel PCEA. Thus, when seeking a drapeable PCEA having a thickness of 8x10⁻⁶m to 3x10⁻⁵m (0.3 to 1.0 mil) for a heat absorbing/heat protective clothing application the carrier plastic or polymer may be a fluoroelastomer, and the concentration of the endothermic agent or thermal storage compound may range from 1.5 x 10⁻⁷kg to 1.9 x 10⁻³kg of endotherm per square metre (0.0001 to 1.2 grams of endotherm per square inch) of PCEA; with a preferred concentration of 1.6 x 10⁻⁵kg to 9 x 10⁻⁵ kg of endotherm per square metre (0.01 to 0.06 grams of endotherm per square inch) of PCEA.

On the other hand, when seeking a flexible PCEA having an observable thickness of, for example 1 inch, then the carrier polymer may be a silicone and the effective concentration of the endotherm in the PCEA will be 0.05%-60% by weight endotherm in PCEA; with a preferred concentration of 20% by weight endotherm in PCEA, for extreme maximum flexibility relative to the highest heat capacity.

The heat absorption/heat protective and/or the heat release/heat preservation properties of the present inventive PCEA materials become readily apparent in the Test Examples below, which represent various embodiments of the inventive PCEAs.

### (c) Embodiments of the Invention.

A series of different PCEAs were prepared in accordance with the principles and requirements as described above. Specifically, natural or synthetic polymers were selected from the group of polymers set forth above. These polymers in turn were softened or liquified by (i) heat, (ii) solution in a solvent or (iii) suspension in a plasticizer, using conventional methods of softening and liquification already known in the art of polymer handling and processing.

To these softened or liquified polymers, in turn, were added an endothermic agent, preferably micronized, selected from the group of endotherms or thermal storage compounds set forth above, in specific concentrations. The polymer and endotherm combinations were then mixed thoroughly to insure the distribution, dispersal, and suspension of the endotherms in the polymers's interstitial spaces; said spaces being formed during the softening of the polymers' long chains of mostly linear molecules. The mixtures were then molded and cured into PCEA thin and thick films, PCEA bricks, various shaped PCEA mulches or extruded, or extruded and spun into PCEA fibers. Alternatively, the PCEA mixtures were contacted, painted and cured onto a polymer substrate, so that upon cooling, or evaporation of the solvent or the plasticizer, the PCEA is literally adsorbed only on the surface of the underlying polymer substrate.

These PCEAS were then tested to determine their heat absorbing capacities and performance, using standard calorimeter testing procedures. The results of some of these PCEA calorimeter tests were as follows:

### TEST EXAMPLE I

### POLYMER/BORIC ACID FILM

POLYMER: VITON OR OTHER FLUOROELASTOMER
ENDOTHERMIC AGENT: BORIC ACID I.E. A STRICT ENDOTHERM.
LATENT HEAT OF DECOMPOSITION OF BORIC ACID: 1.7x10⁶ J/kg (400 CAL/G)
THICKNESS OF FILM: 2.54x 10⁻⁵ m (0.001 INCH)
CONCENTRATION OF BORIC ACID IN THE PCEA: 0.05 kg of boric acid per square metre (0.03 GM OF BORIC
ACID PER SQUARE INCH) OF PCEA.
AMOUNT OF HEAT ABSORBED 51,840 J/m² (10,368 CAL/SQ.YD; 8 CAL/SQ. IN).

### TEST EXAMPLE II

### SILICONE/BORIC ACID FILM

POLYMER: SILICONE
ENDOTHERMIC AGENT: BORIC ACID I.E. A STRICT ENDOTHERM
LATENT HEAT OF DECOMPOSITION OF BORIC ACID: 1.7x10⁻⁶ J/kg (400CAL/G)
THICKNESS OF FILM: 2.54x10⁻⁵m (0.001 INCH OR 1.0 MIL)
CONCENTRATION OF BORIC ACID IN THE PCEA: 0.075 kg of boric acid per square metre. (0.05 GM OF BORIC
ACID PER SQUARE INCH) OF PCEA.
AMOUNT OF HEAT ABSORBED: 130 000 J/m² (20 CAL/SQ. IN)

### TEST EXAMPLE III

### SILICONE/BORIC ACID PCEA

POLYMER: SILICONE
ENDOTHERMIC AGENT: BORIC ACID I.E. A STRICT ENDOTHERM
ENDOTHERM: BORIC ACID HAVING A LATENT HEAT OF FUSION OF 1.7x10⁶ J/kg (400 CAL/GM) AT 140 DEGREES CELSIUS.
PREPARATION: THE BORIC ACID IS SUSPENDED IN A SILICONE GEL AND CURED.
RESULTS:
   (A) THE FLEXIBILITY VALUES ARE A DIRECT FUNCTION OF THE RATIO OF ENDOTHERM TO SILICONE;
   (B) AT A BORIC ACID CONCENTRATION OF 20% BY WEIGHT BORIC ACID IN SILICONE PCEA THE AMOUNT OF HEAT ABSORBED IS 3350 J/kg (80 CAL/100 GMS) OF PCEA.
   NOTE: Carbon monoxide copolymer is a recyclable endotherm. This means that after it has absorbed 6.2 cal/sq.in. the PCEA can be used to transfer 6.2 cal/sq.in. to a cold sensitive device, animal, or human, which is being exposed to extreme cold conditions.

### TEST EXAMPLE VI

### FLUOROCARBON/HOMOPOLYMER FILM

POLYMER: FLUOROCARBON
LATENT HEAT OF FUSION OF HOMOPOLYMER: 80 CAL/G
THICKNESS OF FILM: 0.001 INCH
CONCENTRATION OF HOMOPOLYMER IN THE PCEA: 0.06 GM PER SQUARE INCH OF PCEA.
AMOUNT OF HEAT ABSORBED: 4.8 CAL/SQ. IN.
   NOTE: The Homopolymer is a recyclable endotherm. This means that after it has absorbed 4.8 cal/sq. in. the PCEA can be used to transfer 4.8 cal/sq. in. to a cold sensitive device, animal, or human, which is being exposed to extreme cold conditions.

### TEST EXAMPLE VII

### SILICONE/HOMOPOLYMER: CARBON MONOXIDE COPOLYMER PCEA

POLYMER: SILICONE
ENDOTHERMIC AGENTS: HOMOPOLYMER AND CARBON MONOXIDE COPOLYMER I.E. RECYCLABLE ENDOTHERMS
LATENT HEAT OF FUSION OF THE HOMOPOLYMER IS 80 CAL/GM;
CARBON MONOXIDE COPOLYMER HAVING 103 CAL/GM; 50:50 RATIO HAS A LATENT HEAT OF FUSION OF 91.5 CAL/GM.
PREPARATION: THE HOMOPOLYMER AND CARBON MONOXIDE COPOLYMER ARE SUSPENDED IN A SILICONE GEL AND CURED. RESULTS:
   (A) THE FLEXIBILITY VALUES ARE A DIRECT FUNCTION OF THE RATIO OF ENDOTHERMS TO SILICONE;
   (B) AT ENDOTHERM CONCENTRATION OF 20% BY WEIGHT THE AMOUNT OF HEAT ABSORBED AND CAPABLE OF BEING RELEASED IS 1830 CAL/100 GMS OF PCEA.

It is clear from the above that PCEAs will perform superbly in applications directed to the absorption of heat. Furthermore, when the applications call for near isothermal conditions, i.e. two dimensional thermal conductivity or increased thermal conductivity along the surface plane, then any PCEA set forth in the examples above, or formed in accordance with the present disclosure, can be coupled with a metalized or thermally conductive material. This will diffuse the heat of hot spots across the entire surface of the PCEA. In fact, it was found that when a thermally conductive material was contacted to a 2.5x10⁻⁵(1.0 mil) thick PCEA film comprising a homopolymer endotherm y whose concentration was 0.03kg of homopolymer endotherm per square metre (0.02 gm of homopolymer endotherm per sq. in), the homopolymer [heat of fusion: 3.4x10⁵ J/kg (80 cal/gm)] was capable of rapidly absorbing 10378 J over 1 square metre (2073.6 cal over 1 sq. yard); regardless of where the thermal flux was applied on the surface of the PCEA.

When the PCEA applications require some kind of ventilation and breathabillty, as for example in clothing, then the PCEA film can be pierced or provided with tears, holes, or openings. Such openings do not compromise the heat absorption performance of the PCEAs, nor do they affect the overall structural integrity of the application.

### (d) Invention Applications.

The inventive PCEAs can be formed into thin and thick films. They may be drawn, molded or spun into fibers of all dimensions. They can be formed and chopped into PCEA mulch; the size of the mulch varying with the particular application. They can be molded into a brick or gasket. In fact, various modifications can be made to the present invention, as will be apparent to those skilled in the art; modifications which will depend on and become readily apparent from the particular applications for which the inventive PCEAs are intended for.

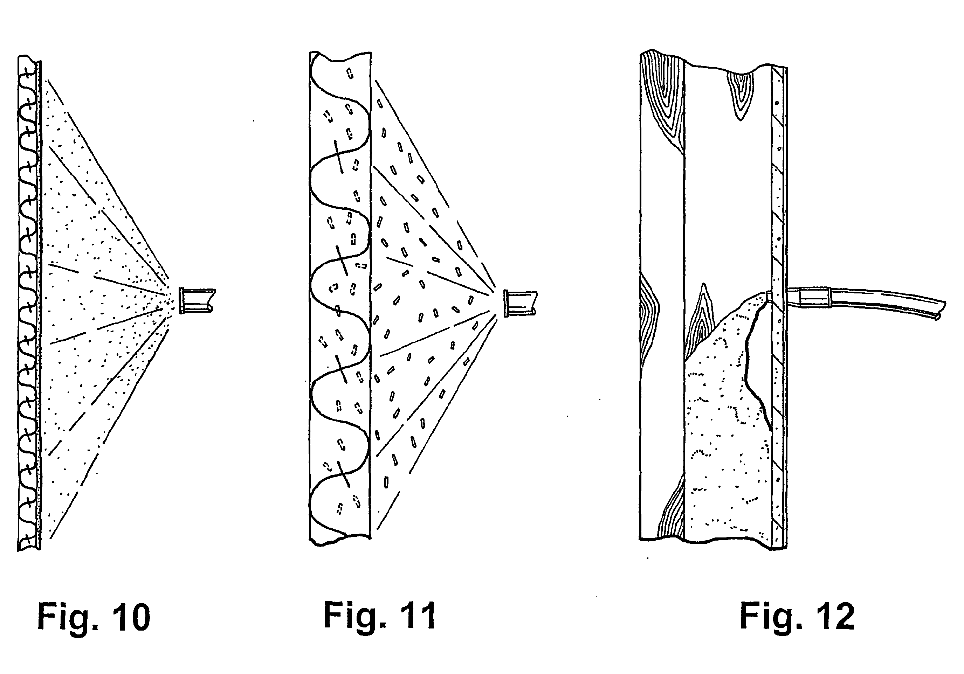

Thus, depending on the characteristics of the PCEA prepared, i.e. the heat capacity of its endothermic agent(s), the polymer(s) used, its form size and shape, the PCEA can be used for thermal control in protective clothing, winter clothing, boats, furniture, pipes, diving suits, hoses, auto interiors, fire walls, chemical processes, kitchen clothing and gear. Or, the PCEA can be used for environmental control in paint, pipes, tubs, walls as shown for example in Fig. 12, shipping containers, medical devices, food, homes, aircraft, automobiles and tanks. Finally the inventive PCEAs can be used as protective pads in gloves, shoes, lab coats, fire gear and even ablative surgery:

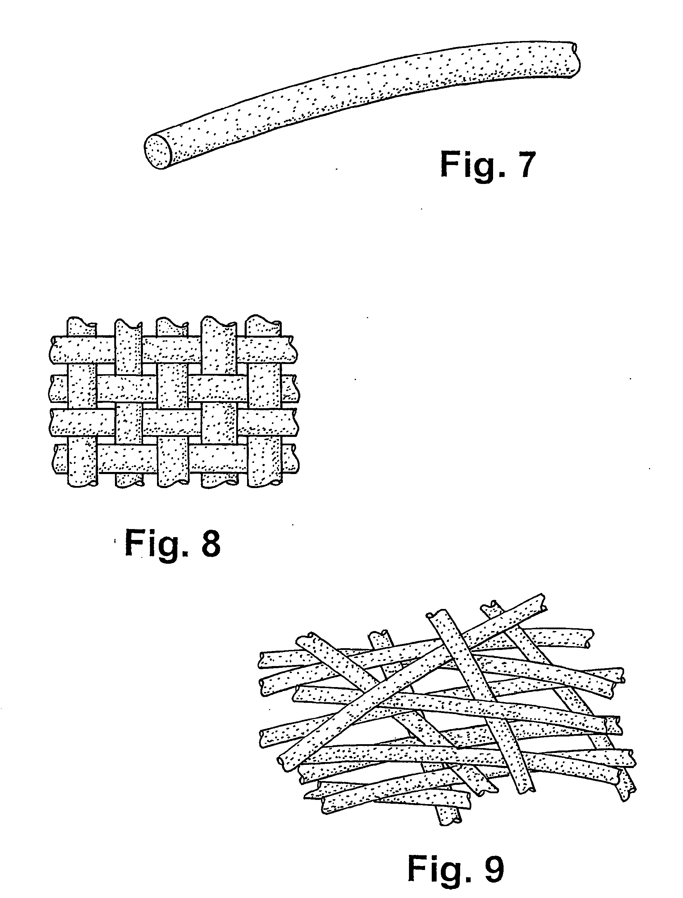

In fact, the applications and uses of the inventive PCEA are infinite; limited only by the imagination of man and his ability to design new ways to protect in extreme environmental conditions, either hot or cold. Thus, the PCEA can also be formed into surfaces for use under carpets or adhered to carpets using a method such as that portrayed in Fig. 10 and Fig. 11 in an effort to keep homes in as near an isothermal situation as possible. On the other hand, the PCEA may also be used as a means of camouflage by the removal of the heat signature of military combat gear, troops and military vehicles; or as a flexible thermal shield for the protection of spacecraft electronics and satellites from the harmful effects of solar radiation. Finally, PCEA fibers can be knit, spun or woven into protective cloth as shown in Fig. 8 and Fig. 9, whose applications can also be infinite.

## Claims

1. A flexible thermal control composite comprising an endothermic agent and a polymer, the endothermic agent being distributed, dispersed and suspended within the polymer, **characterised in that** the endothermic agent is a strict endotherm and is selected from the group consisting of aluminium hydroxide, calcium hydroxide, potassium hydroxide, lithium hydroxide, boric acid, paraldehyde, paraformaldehyde, trioxane, lithium formate, lithium acetate, lithium carbanate, calcium carbonate, silicon carbonate, magnesium carbonate, sodium bicarbonate, salts of acetic acid, salts of formic acid and salts of boric acid.

2. The flexible thermal control composite of claim 1, further comprising a thermally conductive material in contact with said polymer.

3. The flexible thermal control composite of claim 1 or 2, wherein the endothermic agent is micronized.

4. The flexible thermal control composite of any one of the preceding claims, wherein said polymer is selected from the group of polymers consisting of natural and synthetic polymers.

5. The flexible thermal control composite of any one of the preceding claims. wherein said polymer is selected from the group of polymers consisting of latexes, fluoropolymers, expanded fluoropolymers, fluoroelastomers, elastomers, polyimides, polyesters, high density polymers, polyamides, polyarylates, polyetherimides, polyketones, polyphenylene oxides, polyphenylene sulfides, polyphenylsulfones, polysulfones, acetals, nylons, ABS, polyetheretherketones, phenolics, polystyrenes, polycarbonates, polyethylenes, polypropylenes, acrylics, polyuethanes, polyvinyls, polyvinylchlorides, and the mixtures thereof.

## Patentansprüche

1. Flexibler Wärmedämmverbundstoff, der ein endothermes Mittel und ein Polymer umfasst, wobei das endotherme Mittel in dem Polymer verteilt, dispergiert und suspendiert ist, **dadurch gekennzeichnet, dass** das endotherme Mittel strikt endotherm ist und aus der Gruppe bestehend aus Aluminiumhydroxid, Calciumhydroxid, Kaliumhydroxid, Lithiumhydroxid, Borsäure, Paraldehyd, Paraformaldehyd, Trioxan, Lithiumformiat, Lithiumacetat, Lithiumcarbonat, Calciumcarbonat, Siliziumcarbonat, Magnesiumcarbonat, Natriumbicarbonat, Essigsäuresalzen, Ameisensäuresalzen und Borsäuresalzen ausgewählt ist.

2. Flexiber wärmedämmverbundstoff nach Anspruch 1, der ferner ein wärmeleitendes Material in Kontakt mit dem genannten Polymer umfasst.

3. Flexibler Wärmedämmverbundstoff nach Anspruch 1 oder 2, wobei das endotherme Mittel mikronisiert ist.

4. Flexibler Wärmedämmverbundstoff nach einem der vorherigen Ansprüche, wobei das genannte Polymer ausgewählt ist aus der Polymergruppe bestehend aus natürlichen und synthetischen Polymeren.

5. Flexibler Wärmedämmverbundstoff nach einem der vorherigen Ansprüche, wobei das genannte Polymer ausgewählt ist aus der Polymergruppe bestehend aus Latices, Fluorpolymeren, expandierten Fluorpolymeren, Fluorelastomeren, Elastomeren, Polyimiden, Polyestern, hochdichten Polymeren, Polyamiden, Polyarylaten, Polyetherimiden, Polyketonen, Polyphenylenoxiden, Polyphenylensulfiden, Polyphenylsulfonen, Polysulfonen, Acetalen, Nylons, ABS, Polyetheretherketonen, Phenolen, Polystyrolen, Polycarbonaten, Polyethylenen, Polypropylenen, Acrylen, Polyurethanen, Polyvinylen, Polyvinylchloriden und Gemischen davon.

## Revendications

1. Composite souple de régulation thermique comprenant un agent endothermique et un polymère, l'agent endothermique étant réparti, dispersé et suspendu au sein du polymère, **caractérisé en ce que** l'agent endothermique est strictement endothermique, et **en ce qu'**il est sélectionné dans le groupe qui comprend l'hydroxyde d'aluminium, l'hydroxyde de calcium, l'hydroxyde de potassium, l'hydroxyde de lithium, l'acide borique, le paraldéhyde, le paraformaldéhyde, le trioxane, le formate de lithium, l'acétate de lithium, le carbonate de lithium, le carbonate de calcium, le carbonate de silicium, le carbonate de magnésium, le bicarbonate de sodium, les sels de l'acide acétique, les sels de l'acide formique et les sels de l'acide borique.

2. Composite souple de régulation thermique selon la revendication 1, qui comprend de plus une matière thermoconductrice en contact avec ledit polymère.

3. Composite souple de régulation thermique selon la revendication 1 ou 2, dans lequel l'agent endothermique est micronisé.

4. Composite souple de régulation thermique selon l'une quelconque des revendications précédentes, dans lequel ledit polymère est sélectionné dans le groupe de polymères consistant en polymères naturels et polymères synthétiques.

5. Composite souple de régulation thermique selon l'une quelconque des revendications précédentes, dans lequel ledit polymère est sélectionné dans le groupe de polymères qui comprend les latex, les fluoropolymères, les fluoropolymères expansés, les fluoroélastomères, les élastomères, les polyimides, les polyesters, les polymères haute densité, les polyamides, les polyarylates, les polyétherimides, les polycétones, les oxydes de polyphénylène, les sulfures de polypriényléne, les polyphénylsulfones, les polysulfones, les acétals, les nylons, les ABS, les polyétheréthercétones, les phénoliques, les polystyrènes, les polycarbonates, les polyéthylènes, les polypropylènes, les acryliques, les polyuréthanes, les polyvinyles, les chlorures de polyvinyle et les mélanges de ceux-ci.
